(19) Europäisches Patentamt
European Patent Office
Office européen des brevets

(11) **EP 1 699 035 A1**

(12) **EUROPEAN PATENT APPLICATION**
published in accordance with Art. 158(3) EPC

(43) Date of publication:
06.09.2006 Bulletin 2006/36

(51) Int Cl.:
*G09G 3/20* (2006.01)     *G09G 3/36* (2006.01)
*G09G 5/00* (2006.01)

(21) Application number: 04807766.3

(22) Date of filing: 24.12.2004

(86) International application number:
PCT/JP2004/019410

(87) International publication number:
WO 2005/064584 (14.07.2005 Gazette 2005/28)

(84) Designated Contracting States:
DE FR GB

(30) Priority: 25.12.2003 JP 2003431384

(71) Applicants:
• National Institute of Information and
Communications Technology Incorporated
Administrative Agency
Koganei-shi,
Tokyo 184-0015 (JP)

• Olympus Corporation
Tokyo 151-0072 (JP)

(72) Inventor: OHSAWA, Kenro
Nat. Inst. of Info. & Comm. Techn.
Koganei-shi, Tokyo 1840015 (JP)

(74) Representative: von Hellfeld, Axel
Schweigerstrasse 2
81541 München (DE)

(54) **DISPLAY SYSTEM**

(57) A display system according to an embodiment of the present invention includes: a color image display device for displaying a color image; and an image correction device for producing corrected color image data to be outputted to the color image display device by correcting color image data. In the display system, the image correction device calculates the corrected color image data from the color image data so as to correct optical flare of the color image display device on the basis of relationship(s) between one of a plurality of test color image data outputted to the color image display device and the spatial distribution of display colors of a test color image that has been displayed on the color image display device in accordance with the one of the plurality of test color image data.

# FIG.2

2: IMAGE CORRECTION DEVICE

1 — PROJECTOR

11 — IMAGE DATA STORAGE DEVICE

12 — FLARE CORRECTION DEVICE

13 — FLARE CALCULATION DEVICE

4 — TEST IMAGE SHOOTING CAMERA

## Description

Technical Field

The present invention relates to a display system for correcting the effect of optical flare and then displaying images.

Background Art

Recently, techniques for reproducing an image of a subject on a display with accurate color reproduction have been actively studied so as to facilitate electronic commerce, electronic art galleries, electronic museums, etc.
In these studies, color characteristics of an image input device and an image display device are measured, and using the information on the color characteristics of these devices, the correction of a color signal is performed. It is important to standardize the format of information on color characteristics of devices so as to enable color reproduction systems to become popular. The International Color Consortium (ICC) defines color characteristics information on devices as device profiles (see, http://www.color.org).
In the above-described ICC's device profiles and current color image systems, color characteristics are defined for color image devices or image data as space-coordinate-independent information. Using the color information, color reproduction is performed.
The above-described ICC's device profiles and current color image systems cannot take into account the effect that a color that exists in one position in an image has upon a color that exists in another position in the image, for example, the effect of optical flare occurring in a display device. Therefore, in the display device affected by optical flare, exact color reproduction cannot be adequately performed.

Disclosure of Invention

Means for Solving Problems

The present invention has been made in view of the above-described background, and it is an object of the present invention to provide a display system capable of performing color reproduction as intended by reducing the effect of optical flare.
According to an embodiment of the present invention, there is provided a display system includes: a color image display device for displaying a color image; and an image correction device for producing corrected color image data to be outputted to the color image display device by correcting color image data. In the display system, the image correction device calculates the corrected color image data from the color image data so as to correct optical flare of the color image display device on the basis of relationship(s) between one of a plurality of test color image data outputted to the color image display device and the spatial distribution of display colors of a test color image that has been displayed on the color image display device in accordance with the one of the plurality of test color image data.

Brief Description of the Drawings

Fig. 1 is a schematic diagram showing a configuration of a display system according to an embodiment of the present invention.
Fig. 2 is a block diagram showing a configuration of an image correction device according to the above-described embodiment.
Fig. 3 is a block diagram showing a configuration of a flare calculation device according to the above-described embodiment.
Fig. 4 is a diagram showing image data of a geometric correction pattern outputted by a test image output device in the above-described embodiment.
Fig. 5 is a diagram showing text data in which coordinate information on center positions of cross patterns is stored in the above-described embodiment.
Fig. 6 is a diagram showing an area to be divided in test color image data outputted by the test image output device in the above-described embodiment.
Fig. 7 is a diagram showing text data in which coordinate information on sub-areas into which an area is divided is stored in the above-described embodiment.
Fig. 8 is a block diagram showing a configuration of a shot image input device according to the above-described embodiment.
Fig. 9 is a diagram showing sample areas set to a shot image of the test color image in the above-described embodiment.
Fig. 10 is a diagram showing sample areas of a light-emitting area and non-light-emitting areas.

Best Mode for Carrying Out the Invention

First, a principle used in the present invention will be described in detail prior to the detailed description of an embodiment of the present invention. This principle is for acquiring display image data that is the same as original input image data by providing corrected input image data in a case where the input image data has been undesirably changed into different display image data by being affected by, for example, optical flare (hereinafter referred to as flare where appropriate) of a display device.

[Principle]

Input image data having the number of pixels N, which is inputted into a display device, is represented as $(p_1, p_2, \cdots, p_N)^t$. The superscript t represents a transposition. The light distribution of image actually displayed with respect to the input image data is represented in a discrete representation manner as image data that has the number of pixels N, and discreted display image data is assumed to be $(g_1, g_2, \cdots, g_N)^t$. This display image data can be acquired by shooting an image displayed on the display device using, for example, a digital camera. In general, since this display image data is affected by flare of the display device, it does not correspond to the input image data. In the display image data, part of light emitted by means of signals outputted from other pixel locations is superposed onto light emitted in one pixel location. Even if the value of an input image signal inputted into the display device is zero, the value of the display image data does not generally become zero. In this case, the display image data is represented as a bias $(o_1, o_2, \cdots, o_N)^t$. Taking the above-described effects into account, the relationship between the input image data and the display image data is modeled as equation 1.

$$[\text{Equation } 1]$$

$$
\begin{pmatrix} g_1 \\ g_2 \\ \vdots \\ g_N \end{pmatrix} =
\begin{pmatrix} m_{11} & m_{12} & \cdots & m_{1N} \\ m_{21} & m_{22} & \cdots & m_{2N} \\ \vdots & \vdots & \ddots & \vdots \\ m_{N1} & m_{N2} & \cdots & m_{NN} \end{pmatrix}
\begin{pmatrix} p_1 \\ p_2 \\ \vdots \\ p_N \end{pmatrix} +
\begin{pmatrix} o_1 \\ o_2 \\ \vdots \\ o_N \end{pmatrix}
$$

The following equation 2 represents equation 1 in a simple manner using capital letters corresponding to lowercase letters that represent individual elements in the determinant of equation 1.

$$[\text{Equation } 2]$$

$$\mathbf{G} = \mathbf{MP} + \mathbf{O}$$

In equation 2 and the following equations, matrixes and vectors are represented in bold letters. However, in the text, these matrixes and vectors are represented in normal-width letters for convenience in writing.
In the above-described equations 1 and 2, a phenomenon in which light emitted in one pixel location n (n = 1 - N) is spread over other pixel locations around the pixel location n and is then added to light emitted in other pixel locations, is modeled for all pixel locations n. Here, a matrix M shown in equation 2 (in the case of equation 1, the matrix including elements $m_{ij}$ (i = 1 - N, j = 1 - N)) is referred to as display characteristics of a display device.
It is desired that the above-described display image data G exactly corresponds to the above-described input image data P. However, as described previously, since the display image is affected by flare or the like, the display image data is generally not the same as the input image data.
Accordingly, in order to make the display image data correspond exactly to or be very similar to the original input image data by correcting the input image data and using the corrected input image data, a method of calculating the corrected input image data will be considered. When the corrected input image data is represented as P', corrected display image data G' that is display image data corresponding exactly to the corrected input image data P' is as shown in the following equation 3.

[Equation 3]

$$G' = MP' + O$$

A conditional equation for making the corrected display image data G' shown in equation 3 correspond exactly to the original input image data P is as shown in the following equation 4.

[Equation 4]

$$G' = P$$

In order to satisfy equation 4, the corrected input image data P' shown in the following equation 5, which is calculated using equation 3, can be used.

[Equation 5]

$$P' = M^{-1}[P - O]$$

where the display characteristics M are known.

As described previously, the display characteristics M shown in equation 5 are represented as a matrix of N x N. For example, in a case where a display device has 1280 x 1024 pixels, the value of N becomes 1280 x 1024 = 1310720. As is apparent from this case, data size generally becomes very large.

On the other hand, when the display characteristics M have special characteristics, computing may be more easily performed. For example, the case in which the spreading of light occurring due to flare or the like of the display device does not depend on pixel locations and is evenly distributed will be considered. When the display characteristics in this case are represented as $M'(m'_1, m'_2, \cdots, m'_N)$, the above-described equation 1 or 2 is as shown in the following equation 6 using a convolution operation of the display characteristics M' and the input image data P.

[Equation 6]

$$G = M'*P + O$$

where the sign " * " represents a convolution operation.

The following equation 7 can be acquired by replacing the input image data P in equation 6 with the corrected input image data P' and by using the condition shown in the above-described equation 4.

[Equation 7]

$$P = M'*P' + O$$

where, when the display characteristics M' are known, the corrected input image data P' can be calculated using equation 7. That is, a technique of deconvolution for calculating one image (here, P') using another known image (here, M') from a convolution image of two images (here, P - O) is known. For example, a method described in chapter 7 of document 1 (Rosenfeld and A. C. Kak, Digital Picture Processing, Academic Press 1976 (whose translation was supervised by Makoto Nagao, kindaikagaku, 1978)) can be used.

The correction method shown in the above-described equation 5 includes an inverse matrix operation of a matrix M that has many elements. The correction method shown in the above-described equation 7 and document 1 includes convolution inverse operations. Accordingly, these complex operations lead to significant loads on a processor and long processing time.

On the other hand, as a simpler and easier correction method, the method of calculating the corrected input image data by subtracting the amount of flare from the input image data will be considered. Here, the display image data G is modeled by being represented as the sum of the input image data P, the bias O, and a flare component F that is data of flare distribution representing the effect of flare or the like.

$$[\text{Equation 8}]$$

$$G = P + O + F$$

The flare component F shown in equation 8 can be represented as shown in the following equation 9 using equation 2.

$$[\text{Equation 9}]$$

$$F = G - P - O = MP - P = (M - E)P$$

where the letter E represents a unit matrix of N x N.

The corrected display image data G' can be represented as shown in the following equation 10 by inputting $P - F - M^{-1}O$, which is acquired by using F in equation 9, into equation 3 as the corrected input image data P'.

$$[\text{Equation 10}]$$

$$G' = MP' + O = M(P - F - M^{-1}O) + O = M\{P - (M - E)P\}$$

$$= 2MP - M^2P = P - (M - E)^2P$$

Here, when the value of an off-diagonal component of M is smaller than one, the value of $-(M - E)^2P$ of the second term in equation 10 becomes smaller than the value of $(M - E)P$ in equation 9. The value of $-(M - E)^2P$ represents a flare correction error of the corrected display image data G', and the value of $(M - E)P$ represents the effect of flare upon the display image data G before the correction. Accordingly, this shows the improvement of the effect of flare.

In addition, F can be acquired from the following equation 11 taking the above-described result into account.

$$[\text{Equation 11}]$$

$$F = (M - E)P - (M - E)^2P$$

The corrected display image data G' can be represented as shown in the following equation 12 by inputting $P - F - M^{-1}O$, which is acquired by using the above-described F, into equation 3 as the corrected input image data P'.

$$[\text{Equation 12}]$$

$$G' = P + (M - E)^3P$$

The value of $(M - E)^3 P$ of the second term of equation 12 represents a flare correction error. As is clear from the fact that the order thereof is three, the effect of flare becomes further smaller.

Similarly, when the flare correction error is calculated using the equation including terms up to the Kth order, the flare F can be obtained as shown in the following equation 13.

[Equation 13]

$$F = \sum_{k=1}^{K} (-1)^{k+1} (M-E)^k P$$

Accordingly, the corrected input image data P' for correcting the flare F shown in equation 13 is as shown in the following equation 14.

[Equation 14]

$$P' = P - M^{-1}O - \sum_{k=1}^{K} (-1)^{k+1} (M-E)^k P$$

When the value of K in equation 14 becomes larger, the correction for increasingly reducing the effect of flare can be performed. Alternatively, by setting the value of K to an appropriate value taking calculation complexity and calculation time into account, the flare can be desirably removed lightening the load on a processing system.

Even if the flare correction is performed in accordance with the above-described method, when the spread of light occurring due to flare or the like does not depend on pixel locations and is evenly distributed, the letter F in equation 9 can be replaced as shown in the following equation 15 using a convolution operation.

[Equation 15]

$$F = M'*P - P$$

Similarly, equation 13 can be replaced with the following equation 16.

[Equation 16]

$$F = (M' - E')*P - (M' - E')*(M' - E')*P + (M' - E')*(M' - E')*(M' - E')*P - \cdots$$

where the letter E' represents a column vector in which the value of a component corresponding to a center position of an image is one, and the values of other components are zero.

Accordingly, the corrected input image data P' corresponding to equation 14 is obtained as shown in the following equation 17.

[Equation 17]

$$P' = P - \tilde{O} - (M' - E')*P + (M' - E')*(M' - E')*P - (M' - E')*(M' - E')*(M' - E')*P + \cdots$$

where Õ represents the value obtained by deconvolution of O using M'.

The description has been given with reference to the case in which image data is handled as one-channel data. However, in the case of color images, the color image data thereof is generally handled as three-channel data. Therefore, in this case, the above-described display characteristics M or M' are calculated for each of R, G, and B channels, and the flare correction is performed on the basis of the calculated display characteristics.

Furthermore, when a color image is displayed by means of image data that has four or more primary colors, the above-described flare correction processing is performed on an image of each channel, whereby the color image can be also displayed as intended.

The value of a signal outputted from a display device or a color image display device such as a digital camera sometimes has a nonlinear relationship with brightness. In this case, the above-described processing is required to be performed after the nonlinearity of each signal is corrected. However, since techniques for correcting gradation characteristics are known, the description thereof will be omitted. That is, the above principle has been described as the principle in linear space after the nonlinearity of each signal is corrected.

An embodiment of the present invention will be described in detail with reference to the accompanying drawings.

<Embodiment>

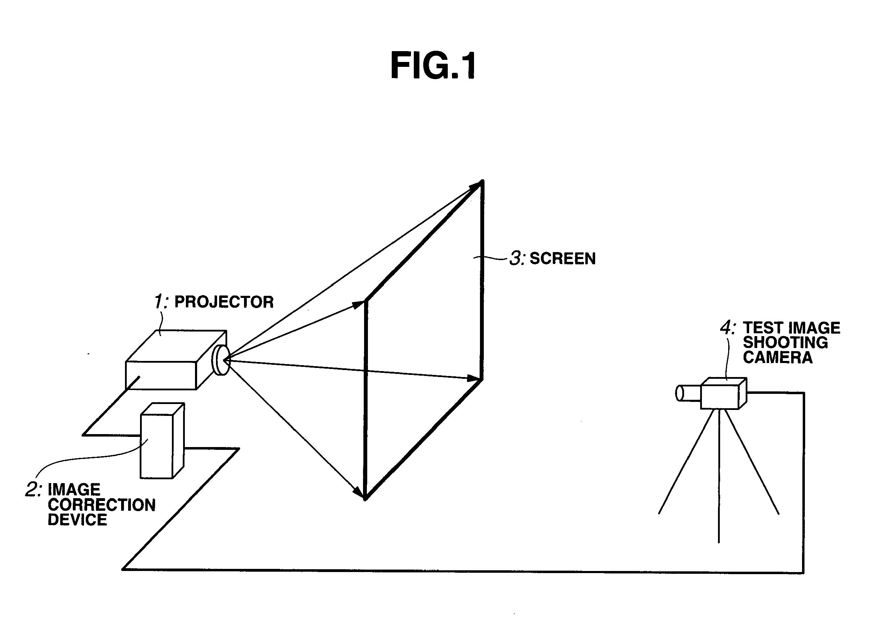

An embodiment of the present invention is shown in Figs. 1 through 10. Fig. 1 is a schematic diagram showing a configuration of a display system.

This display system is configured with the following components: a projector 1, which is a color image display device, for projecting images; an image correction device 2 for producing corrected images to be projected by the projector 1; a screen 3, which is a color image display device, on which images are projected by the projector 1; and a test image shooting camera 4 that is test color image measuring means such as a digital color camera and is disposed so as to shoot a whole image displayed on the screen 3.

The test image shooting camera 4 is included in the image correction device in a broad sense and is provided with a circuit capable of correcting blurs on an image due to the optical characteristics of a shooting lens and the variations of sensitivities of image pickup devices. For example, before digital image data of RGB is outputted from the test image shooting camera 4, the correction is performed on the digital image data. In addition, the test image shooting camera 4 outputs a linear response signal depending on incident light intensity.

Operations of this display system will now be described.

In the display system, operations for acquiring display characteristics data that is required for correcting optical flare are as follows.

The image correction device 2 outputs predetermined test color image data that has been stored therein in advance to the projector 1.

The projector 1 projects the test color image data provided by the image correction device 2 on the screen 3.

The image correction device 2 controls the test image shooting camera 4 so that the test image shooting camera 4 shoots an image with the distribution of display colors corresponding to the test color image displayed on the screen 3 and transfers the data of the shot image to the image correction device 2. Subsequently, the image correction device 2 receives the transferred color image data.

The image correction device 2 calculates display characteristics data used for correcting color image data on the basis of the color image data having been acquired from the test image shooting camera 4 and the original test color image data having been provided to the projector 1.

Next, operations for projecting general images by means of the display system that has acquired the display characteristics data are as follows. When these general images are projected, since the above-described test image shooting camera 4 is not required, it may be removed.

The image correction device 2 stores, in advance, color image data that has been converted so that the color image data can have a linear relationship with brightness.

As describe previously, the image correction device 2 corrects the color image data that has been stored therein in advance using the calculated display characteristics data and then stores the corrected color image data.

When color image data to be displayed is selected by an operator, the image correction device 2 outputs corrected color image data corresponding to the selected color image data to the projector 1.

The projector 1 projects an image on the screen 3 on the basis of the corrected color image data having been provided by the image correction device 2.

Consequently, an image for which the effect of flare can be corrected is displayed on the screen 3, whereby a person who has displayed the image can have a viewer see the image as intended.

In this embodiment, each of the image data inputted into the projector 1, the image data outputted from the test image shooting camera 4, and the image data processed in the image correction device 2 are 1280 pixels wide x 1024 pixels high and are a three-channel image data of three colors, RGB.

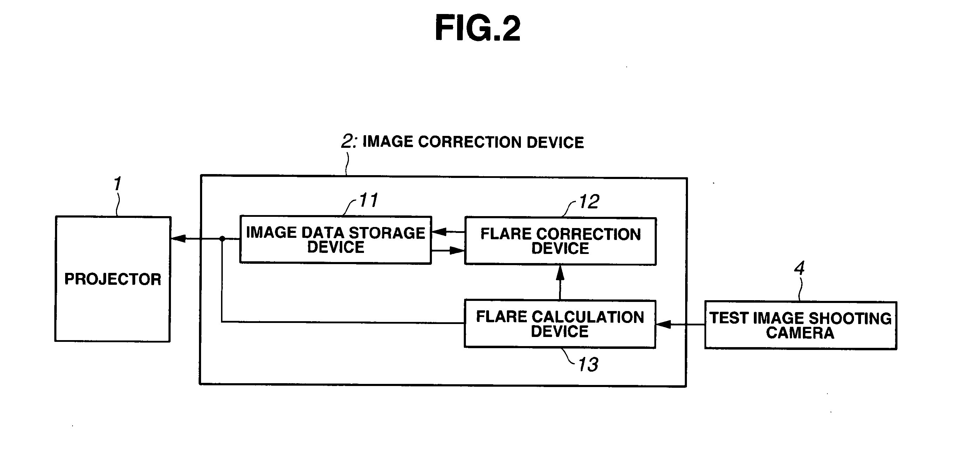

Fig. 2 is a block diagram showing the configuration of the image correction device 2.

The image correction device 2 is configured with the following components: a flare calculation device 13 for outputting predetermined test color image data that has been stored therein in advance to the projector 1 and for acquiring color image data (shot image data) having been shot on the basis of the test color image data from the test image shooting camera 4 and for calculating display characteristics data on the basis of the acquired shot image data and the original test color image data; an image data storage device 11 for storing color image data to be displayed as well as corrected color image data that is acquired as a result of correcting the color image data by means of a flare correction device 12 (described later); and the flare correction device 12 for acquiring the color image data from the image data storage device 11 and for correcting the acquired color image data using the display characteristics data having been calculated by the flare calculation device 13 and for outputting the corrected color image data to the image data storage device 11 again so as to make the image data storage device 11 store the corrected color image data.

Next, operations of the image correction device 2 will be described.

Operations for acquiring the display characteristics data are as follows.

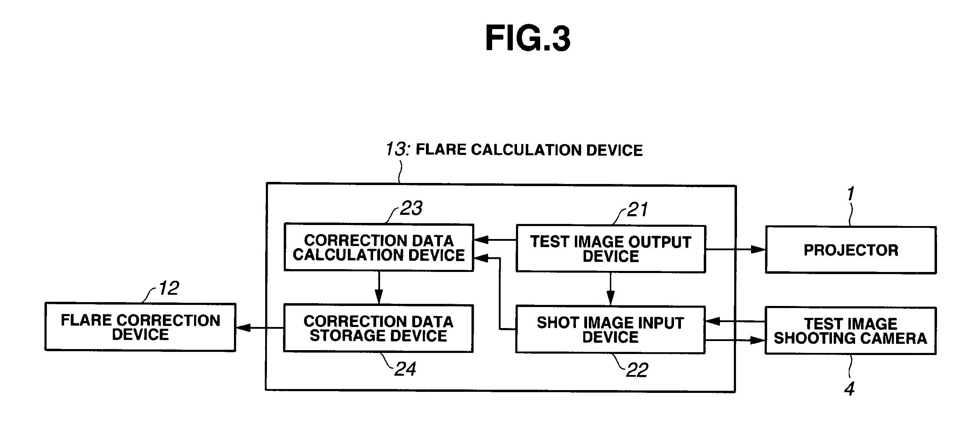

The flare calculation device 13 outputs the test color image data to the projector 1 so as to make the projector 1 display a test color image on the screen 3. In synchronization with this operation, the flare calculation device 13 controls the test image shooting camera 4 so that the test image shooting camera 4 shoots the image displayed on the screen 3 and transfers the color image data of the shot image to the flare calculation device 13. The flare calculation device 13 acquires the color image data of the shot image and calculates the display characteristics data on the basis of the acquired color image data and the original test color image data and then stores the calculated display characteristics data. There are two kinds of display characteristics data calculated by the flare calculation device 13. One is a matrix M of N x N defined by the above-described equation 1 or 2. Another is a matrix M' used in equation 6. Since the image data is RGB three-channel image data, it is assumed that the representation of these equations includes all data of the RGB three-channel image data. Since the number of pixels of the image data is 1280 x 1024 = 1310720, the value of N becomes 1310720 in this case. Operations for calculating the display characteristics data M and M' by the flare calculation device 13 will be described later with reference to Fig. 3.

Next, operations for correcting the color image data are as follows.

The flare correction device 12 reads out the color image data stored in the image data storage device 11 as well as inputs one of the two kinds of display characteristics data M and M' in accordance with a flare correction method from the flare calculation device 13. Subsequently, the flare correction device 12 performs a flare correction operation based on the readout color image data using the readout display characteristics data and then calculates the corrected color image data.

In the description of this embodiment, the color image data and the corrected color image data correspond to the input image data P and the corrected input image data P' in the above-described principle, respectively. As described previously, since, in the color image data and the corrected color image data, each pixel corresponds to RGB three-channel image data, it is assumed that the letters P and P' individually represent the RGB three-channel image data.

The flare correction device 12 is configured with the following first to fourth correction modules. The flare correction device 12 is configured to use the display characteristics data M or M' readout from the flare calculation device 13 for calculating the corrected color image data in these first to fourth correction modules.

The first correction module calculates the corrected color image data P' by inputting the display characteristics data M into equation 5. It is assumed that the bias O has been measured and stored in the flare correction device 12 in advance. For example, the measuring method of the bias O is that a test color image capable of making the values of all components become zero is projected from the projector 1 on the screen 3, and the projected test color image displayed on the screen 3 is shot using the test image shooting camera 4.

The second correction module calculates the corrected color image data P' by inputting the display characteristics data M' into equation 7 and performing a deconvolution operation.

The third correction module is flare calculating means and calculates the corrected color image data P' by inputting the display characteristics data M into equation 14. The constant K can be arbitrarily set by an operator of the image correction device 2.

The fourth correction module is flare calculating means and calculates the corrected color image data P' by inputting the display characteristics data M' into equation 17. The number of terms of the part corresponding to equation 16 in equation 17 (the number of terms corresponds to the above-described constant K) can also be arbitrarily set by an operator of the image correction device 2.

Thus, the corrected color image data calculated by the flare correction device 12 is outputted from the flare correction device 12 to the image data storage device 11 and is then stored in the image data storage device 11.

Operations for projecting and viewing the image of the corrected color image data are as follows.

An operator operates the image correction device 2 and selects desired corrected color image data stored in the image correction device 2. The corrected color image data having been selected is read out from the image data storage device 11 and is then outputted to the projector 1. The projector 1 receives the corrected color image data and then projects an image corresponding to the corrected color image data on the screen 3, whereby the color image in which the effect of flare is reduced can be displayed and viewed on the screen 3.

Fig. 3 is a block diagram showing the configuration of the flare calculation device 13.

This flare calculation device 13 is configured with the following components: a test image output device 21 for storing the test color image data and geometric correction pattern image data (described later) and for outputting the stored image data to the projector 1, a shot image input device 22 (described later), and a correction data calculation device 23 (described later) as required; the shot image input device 22 for inputting the shot color image data from the test image shooting camera 4 by controlling the test image shooting camera 4, and calculating a coordinate transform table required for a geometric correction operation on the basis of the above-described geometric correction pattern image data, and performing the geometric correction operation on the color image data having been inputted from the test image shooting camera 4 using the calculated coordinate transform table, and outputting the geometrically corrected color image data; the correction data calculation device 23 that is display characteristics calculating means for calculating the display characteristics data M and M' on the basis of the original test color image data having been acquired from the test image output device 21 and the shot and geometrically corrected color image data having been acquired via the shot image input device 22; and a correction data storage device 24 for storing the display characteristics data M and M' having been calculated by the correction data calculation device 23, and outputting the stored display characteristics data M and M' to the flare correction device 12 as required.

Operations of the flare calculation device 13 will be described.

The test image output device 21 outputs the test color image data used for measuring display characteristics to the projector 1 as well as transmits a signal showing that it has outputted the test color image data to the shot image input device 22.

Furthermore, the test image output device 21 outputs information on the test color image data having been outputted to the projector 1 to the correction data calculation device 23.

Upon receiving the above-described signal from the test image output device 21, the shot image input device 22 controls the test image shooting camera 4 so that the test image shooting camera 4 shoots the test color image projected on the screen 3 by the projector 1. The color image having been shot by the test image shooting camera 4 is transferred to the shot image input device 22 as shot image data. The shot image input device 22 outputs the acquired shot image data to the correction data calculation device 23.

The correction data calculation device 23 performs processing for calculating display characteristics data on the basis of the information on the original test color image data having been transmitted from the test image output device 21 and the shot image data having been transmitted from the shot image input device 22.

That is, the correction data calculation device 23 is configured with two kinds of display characteristics data calculation module corresponding to the two kinds of display characteristics data M and M', respectively. The first and second display characteristics data calculation modules calculate the display characteristics data M and M', respectively. The correction data calculation device 23 is configured so that an operator of the image correction device 2 can select one of the display characteristics data calculation modules.

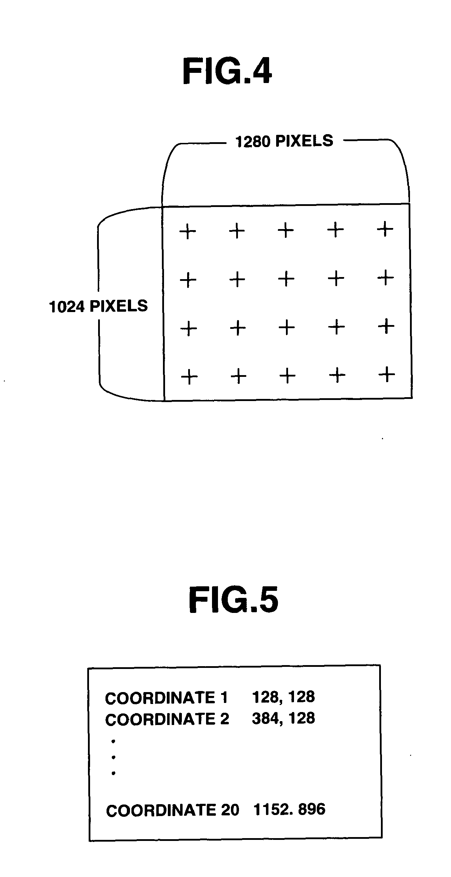

Fig. 4 is a diagram showing image data of a geometric correction pattern outputted by the test image output device 21. Fig. 5 is a diagram showing text data in which coordinate information on center positions of cross patterns is stored.

The test image output device 21 outputs the image data of the geometric correction pattern, for example, shown in Fig. 4 to the projector 1 prior to outputting the test color image data.

The image data of the geometric correction pattern outputted from the test image output device 21 is image data in which black cross patterns are evenly spaced in four rows and five columns against a white background.

The coordinate information on a center position of each cross pattern (geometric correction pattern data) is outputted from the test image output device 21 to the shot image input device 22 as text data in the form shown in Fig. 5.

In the example shown in Fig. 5, the center position of a cross pattern in the upper left corner is defined as a coordinate 1, and the center position of a cross pattern on the right side of the coordinate 1 is defined as a coordinate 2. Thus, pixel locations from the coordinate 1 to a coordinate 20 that represents the center position of a cross pattern in the lower right corner are displayed. Here, a coordinate system that represents a coordinate of each pixel as, for example, (0, 0) in the case of the pixel in the upper left corner and (1279, 1023) in the case of the pixel in the lower right corner is employed.

As described later, the shot image input device 22 produces the coordinate transform table that gives relationship(s) between space coordinates of both the test color image data and the image shot by the test image shooting camera 4 on the basis of this coordinate information and the shot image data of the geometric correction pattern image having been acquired from the test image shooting camera 4.

When the production of the coordinate transform table for the geometric correction is completed, the test image output device 21 outputs the test color image data to the projector 1.

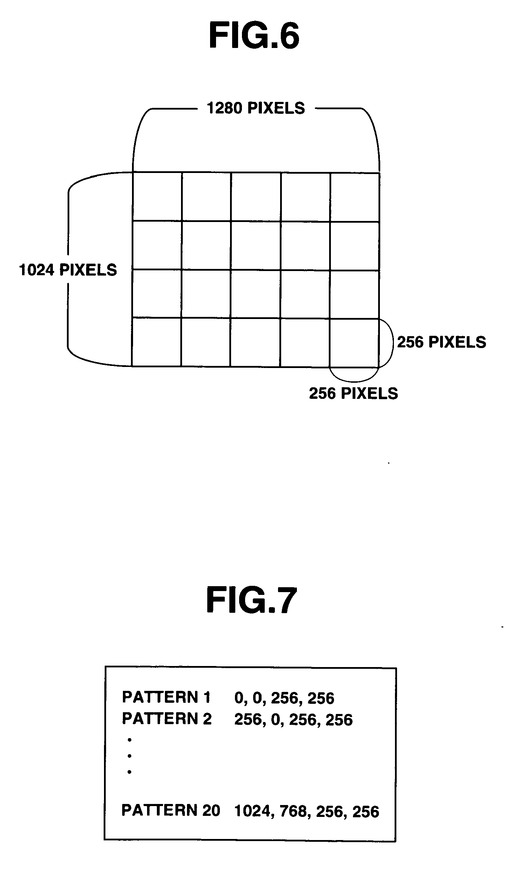

Fig. 6 is a diagram showing an area to be divided in test color image data outputted by the test image output device 21. Fig. 7 is a diagram showing text data storing coordinate information on sub-areas into which an area is divided.

As shown in Fig. 6, an area having 1280 x 1024 pixels is evenly divided into four rows and five columns. The test color image data is configured so that, in only one of the sub-areas (a sub-area with 256 x 256 pixels), one color of RGB colors can be displayed, for example, at maximal brightness. Since all sub-areas, into which an area is divided, individually display each color of RGB colors, sixty kinds of test color image data are prepared and are sequentially displayed.

If processing is performed on each pixel, all pixels are sequentially made to emit light of each color of RGB colors on a pixel-by-pixel basis, whereby the time taken to acquire data becomes too long. In addition, in this case in which light is emitted on a pixel-by-pixel basis, it is difficult to measure the effect of flare in one location from another pixel location owing to an insufficient amount of light. Furthermore, owing to variations in the maximal brightness of individual pixels, the stability of data may be low. For the above-described reasons, an area is divided into twenty sub-areas in all. By performing processing on a block-by-block basis, short-time processing can be achieved using stable data acquired under the condition of a sufficient amount of light.

The coordinate information (pattern data) on the sub-areas in the test color image data is outputted from the test image output device 21 to the correction data calculation device 23 as text data in the form shown in Fig. 7.

Referring to the example shown in Fig. 7, the same coordinate system as that used in Fig. 5 is used. The sub-area in the upper left corner is defined as a pattern 1, and the sub-area on the right side of the pattern 1 is defined as a pattern 2. Thus, pixel locations from the pattern 1 to a pattern 20 that represents the sub-area in the lower right corner are displayed.

More specifically, the pattern 1 represented as (0, 0, 256, 256) shows that the pixel location thereof in the upper left corner is (0, 0), and the sub-area thereof corresponds to the area between (0, 0) and the coordinate placed at a distance of (256, 256) from (0, 0). Accordingly, for example, the pattern 20 represented as (1024, 768, 256, 256) shows that the pixel location thereof in the upper left corner is (1024, 768), and the sub-area thereof corresponds to the area between (1024, 768) and the coordinate placed at a distance of (256, 256) from (1024, 768).

As described later, the correction data calculation device 23 calculates the display characteristics data M or M' on the basis of the coordinate information and the shot image data of the test color image having been acquired from the test image shooting camera 4.

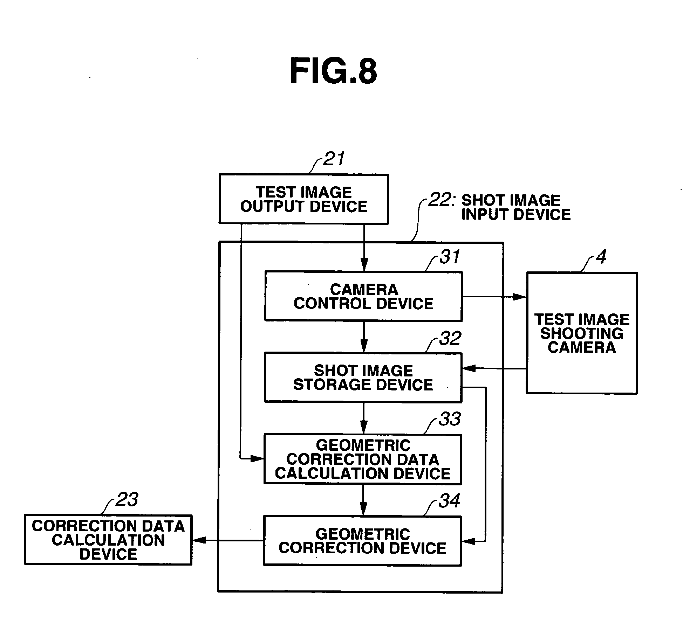

Fig. 8 is a block diagram showing the configuration of the shot image input device 22.

The shot image input device 22 is configured with the following components: a camera control device 31 for controlling the test image shooting camera 4 in accordance with a signal transmitted from the test image output device 21 so that the test image shooting camera 4 performs a shooting operation; a shot image storage device 32 for storing the image data of a shot image having been shot by the test image shooting camera 4; a geometric correction data calculation device 33 for calculating a geometric correction table on the basis of the shot image of a geometric correction pattern image stored in the shot image storage device 32 and the coordinate information corresponding to the geometric correction pattern image having been transmitted from the test image output device 21; and a geometric correction device 34 for performing a geometric correction operation on the image data of the test color image stored in the shot image storage device 32 on the basis of the geometric correction table having been calculated by the geometric correction data calculation device 33 and outputting the geometrically corrected image data to the correction data calculation device 23.

Operations of the shot image input device 22 will be described.

Upon receiving a signal showing that the test image output device 21 has outputted image data to the projector 1 from the test image output device 21, the camera control device 31 outputs a command to the test image shooting camera 4 for controlling and making the test image shooting camera 4 perform a shooting operation.

The shot image storage device 32 receives and stores the image data having been transmitted from the test image shooting camera 4. When the shot image data is for the geometric correction pattern image, the shot image storage device 32 outputs the shot image data to the geometric correction data calculation device 33. When the shot image data is for the test color image data, the shot image storage device 32 outputs the shot image data to the geometric correction device 34.

The geometric correction data calculation device 33 receives the shot image for the geometric correction pattern image from the shot image storage device 32, as well as, coordinate information corresponding to the geometric correction pattern image from the test image output device 21, and then performs processing for calculating a geometric correction table.

The geometric correction table is table data for converting the coordinates of the image data having been transmitted from the test image shooting camera 4 into the coordinates of the image data to be outputted from the test image output device 21. The geometric correction table is calculated as follows.

First, cross patterns are detected from the shot image of the geometric correction pattern image having been transmitted from the shot image storage device 32, and then the coordinates of the center locations of the detected cross patterns are acquired. Next, the geometric correction table is calculated on the basis of the relationship between the twenty groups of coordinates of the center locations of the acquired cross patterns and the coordinates corresponding to the geometric correction pattern image having been transmitted from the test image output device 21.

Many techniques for detecting the cross patterns and for calculating the geometric correction table on the basis of the relationship of the twenty groups of sample coordinates are known. These techniques can be employed as required, but the description thereof will be omitted.

The geometric correction table having been calculated by the geometric correction data calculation device 33 is outputted to the geometric correction device 34.

As described previously, the geometric correction device 34 receives the geometric correction table having been calculated from the geometric correction data calculation device 33, as well as, the shot image of the test color image data from the shot image storage device 32. Subsequently, the geometric correction device 34 performs a coordinate conversion operation on the shot image of the test color image data and then outputs the converted image data to the correction data calculation device 23.

The correction data calculation device 23 calculates at least one of the display characteristics data M and M' on the basis of the coordinate information on the test image having been transmitted from the test image output device 21 and the shot image of the test color image, upon which the geometric correction has been performed, having been transmitted from the shot image input device 22, and then outputs the calculated display characteristics data to the correction data storage device 24.

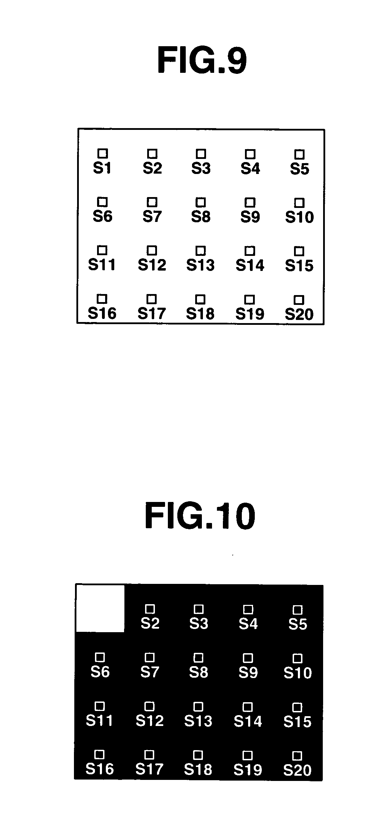

Operations of the correction data calculation device 23 will be described with reference to Figs. 9 and 10. Fig. 9 is a diagram showing sample areas set to the shot image of the test color image. Fig. 10 is a diagram showing sample areas of a light-emitting area and non-light-emitting areas.

In order to obtain the display characteristics data, the correction data calculation device 23 acquires a signal value in a predetermined sample area from the shot image of the test color image upon which the geometric correction operation has been performed.

The sample areas are set as shown in Fig. 9. That is, each of the sample areas is set as an area with 9 x 9 pixels. These sample areas are evenly arranged in four rows and five columns so that these sample areas can individually be placed at locations corresponding to the twenty coordinates of the center locations of light-emitting areas in the test image shown in Fig. 5, and are defined as sample areas S1 through S20.

As shown in Fig. 10, the signal values of sample areas other than a light-emitting area in the test color image (in the example shown in Fig. 10, sample areas S2 through S20 other than the light-emitting area in the upper left corner) are individually acquired. The sum of signal values of pixels in each sample area (the sum of signal values of 81 pixels when one sample area has 9 x 9 pixels) is calculated and averaged. The mean value is set as the value of a flare signal in a coordinate of a center location of each sample area. Thus, first, the distribution of flare signals in coordinates of only center locations of nineteen sample areas other than the light-emitting area is calculated. The reason for adding and averaging the data of a plurality of pixels is that the reliability of data can be improved under the circumstances in which the amount of light occurring owing to the effect of flare is not so large. Since it can be assumed that the flare does not include high-frequency components, this kind of processing is enabled. By performing processing on the basis of the signal values of only sample areas, processing time can be shortened.

Next, flare signals of all other pixel locations are acquired by performing interpolation processing using the nineteen flare signals. As shown in the example of Fig. 10, when the light-emitting area exists in one of the corners, the flare signal of the light-emitting area is acquired by performing an extrapolation operation using a flare signal in an adjacent pixel location.

Thus, all flare signals of one test color image are acquired. The above-described processing is performed on all of the twenty test color images shown in Fig. 5. In this specification, since a three-channel RGB color image has been described by way of example, the above-described processing is performed on sixty test color images in all.

The distribution of twenty flare signals is acquired for each channel. The distribution is regarded as the distribution acquired when only the center pixel of each of the twenty light-emitting areas shown in Fig. 6 emit light (namely, only the center pixel of each light-emitting area is a light-emitting pixel). In fact, since the entire light-emitting area with 256 x 256 pixels emits light, the sum of signal values of one light-emitting area is divided by 65536, and then the value acquired after the division is defined as the value of a flare signal of one light-emitting pixel. Thus, the distribution acquired when only the center pixel of each of the twenty light-emitting areas emit light is converted into the distribution of flare signals each of which is outputted from a light-emitting pixel. The distribution of flare signals of other pixel locations are calculated by performing interpolation processing using the distribution of flare signals of adjacent light-emitting pixel locations.

Thus, the distribution of flare signals when all pixels exist in light-emitting pixel locations is calculated. As described previously, when the entire area is configured with 1280 x 1024 pixels, the distribution of all of the 1310720 flare signals is calculated.

The distribution configured with the flare signals of the 1310720 pixels is produced 1310720 times so that a one-to-one correspondence between the number of flare signals 1310720 and the number of light-emitting pixel locations 1310720 can be achieved. Consequently, the display characteristics data M represented as a matrix of 1310720 rows and 1310720 columns can be provided. As described previously, the display characteristics data is produced for each of the three channels. In the matrix of the display characteristics data M, the letter j of each element $m_{ij}$ corresponds to the coordinate of a light-emitting pixel, and the letter i corresponds to the coordinate of a pixel for which a flare signal is acquired.

The display characteristics data M' that is calculated by the second display characteristics data calculation module of the correction data calculation device 23 and is then used by the second or fourth correction module of the flare correction device 12, is calculated as follows. The distribution of twenty flare signals corresponding to twenty light-emitting areas is moved to a coordinate that enables the coordinate of the center position of a light-emitting area to correspond to the coordinate of the center position of an image, and then the twenty flare signals are averaged, whereby the display characteristics data M' can be acquired.

As described previously, the flare correction device 12 performs a correction operation on the color image data using the display characteristics data M or M' that has been calculated and then outputs the corrected color image data to the image data storage device 11.

Like general image display devices, a gradation correction operation is performed on the acquired corrected color image data taking gradation characteristics of a projector into account. However, the gradation correction technique is known as a technique for color reproduction processing, so the description thereof will be omitted.

Although this embodiment has been described by using a projector as an example of a color display device, the present invention is not limited thereto. For example, an arbitrary image display device, for example, a CRT or a liquid crystal panel, can be applied to the present invention.

As means for acquiring the spatial distribution of display colors corresponding to test color image data, a test image shooting camera (color camera) configured with an RGB digital camera is used in the above description. However, a monochrome camera or a multiband camera with four or more bands may be used. Alternatively, like the example shown in Fig. 9, when the number of samples to be measured is relatively small, a measuring device for performing spot measurement such as a spectroradiometer, a luminance meter, and a colorimeter may be used as means for acquiring the spatial distribution of display colors instead of the camera. In this case, the accuracy of measurement can be expected to be increased.

In the above description, the case in which both the image data projected by a projector and the image data acquired by a test image shooting camera are 1280 pixels wide x 1024 pixels high is illustrated, but the number of pixels may be changed. In addition, the number of pixels for displaying and the number of pixels for shooting may be different from each other. In general, the combination of the number of pixels for displaying and the number of pixels for shooting can be arbitrarily selected. In this case, the calculation of the display characteristics data is performed in accordance with the size of the corrected color image data.

Furthermore, the number of cross patterns in the geometric correction pattern, the number of light-emitting areas in the test color image, and the number of sample areas for flare signal measurement are set to twenty, but each number may be set to an arbitrary number. Alternatively, the operator of the image correction device may set each number to a desired number considering the accuracy of measurement and measurement time.

In the above description, the image data upon which a flare correction operation has been performed is stored in advance, and then the corrected image data is used when the image data is projected onto a screen. In a case where sufficient processing speed can be ensured, the image data inputted from an image source may be flare-corrected and then be displayed in real time.

Furthermore, in the above description, the case in which a display system performs processing as hardware has been given. However, the same function may be achieved by making a computer to which a display device such as a monitor and a measurement device such as a digital camera are connected, perform a display program or may be achieved by a display method applied to a system that has the above-described configuration.

According to the above-described embodiment, the effect of light from another pixel location upon a display color in an arbitrary pixel location is preferably reduced, whereby a display system capable of displaying a color image with high color reproducibility can be achieved.

Since test color image measuring means for measuring the spatial distribution of display colors corresponding to test color image data is provided in this embodiment, the display characteristics of the color image display device can be accurately and simply measured. Consequently, the secular change of the color image display device can be supported.

In particular, by employing a color camera such as a digital camera as the test color image measuring means, the spatial distribution of display colors can be more easily acquired.

On the other hand, by employing a luminance meter, a colorimeter, and a spectroradiometer as the test color image measuring means, the display characteristics can be more accurately measured. Alternatively, by employing a monochrome camera as the test color image measuring means, low-cost device configuration can be achieved. Furthermore, by employing a multiband camera as the test color image measuring means, not only acquirement of accurate display characteristics but also accurate spatial measurement can be achieved.

By calculating and using the display characteristics data of the color image display device on the basis of the test color image data and the spatial distribution of display colors corresponding to the test color image data, flare correction based on a flare model can be accurately performed.

Moreover, since the corrected color image data is calculated on the basis of flare distribution data having been calculated by the flare calculating means, the calculation of the corrected image data can be easily performed.

Since the representation of equation 13 is used as the vector F that represents the flare distribution data, optimal flare correction in which the loads and accuracy of calculation are taken into account can be performed by setting the constant K in equation 13 to an appropriate value. Similarly, when the representation of equation 16 is used as the vector F that represents the flare distribution data, optimal flare correction in which the loads and accuracy of calculation are taken into account can be performed by setting the number of terms on the right side to an appropriate value.

Thus, a display system capable of performing color reproduction operations as intended by reducing the effect of optical flare can be provided.

It should be understood that the present invention is not limited to the above-described embodiment, and various modifications and variations may be made to the present invention without departing from the scope and spirit of the present invention.

The present invention contains subject matter related to Japanese Patent Application JP 2003-431384 filed in the Japanese Patent Office on December 25, 2003, the entire contents of which are incorporated in this specification, claims, and drawings by reference.

Industrial Applicability

As described previously, according to the embodiment of the present invention, color reproduction can be performed as intended by reducing the effect of optical flare.

**Claims**

1. A display system comprising:

   a color image display device for displaying a color image; and
   an image correction device for producing corrected color image data to be outputted to the color image display device by correcting color image data,
   wherein the image correction device calculates the corrected color image data from the color image data so as to correct optical flare of the color image display device on the basis of relationship(s) between one of a plurality of test color image data outputted to the color image display device and the spatial distribution of display colors of a test color image that has been displayed on the color image display device in accordance with the one of the plurality of test color image data.

2. The display system according to Claim 1, wherein the image correction device comprises test color image measuring means for measuring the spatial distribution of display colors of the test color image that has been displayed on the color image display device in accordance with the test color image data.

3. The display system according to Claim 2, wherein the test color image measuring means comprises at least one of a luminance meter, a colorimeter, a spectroradiometer, a monochrome camera, a color camera, and a multiband camera.

4. The display system according to any one of Claim 1, 2, or 3, wherein the image correction device comprises display characteristics calculating means for calculating display characteristics data of the color image display device on the basis of the test color image data and the spatial distribution of display colors of the test color image that has been displayed on the color image display device in accordance with the test color image data, the image correction device calculating the corrected color image data on the basis of the display characteristics data having been calculated by the display characteristics calculating means.

5. The display system according to Claim 4, wherein the image correction device further comprises flare calculating means for calculating the corrected color image data by calculating flare distribution data of the color image data using the display characteristics data, and subtracting the calculated flare distribution data from the color image data.

**6.** The display system according to Claim 5, wherein, when a vector having data of each pixel of a plurality of pixels included in the color image data as a component is defined as P, the number of components of the vector P is defined as N (N is a natural number), a unit matrix of N x N is defined as E, the matrix representation of N x N showing the display characteristics of the color image display device is defined as M, and an arbitrary constant is defined as K, a vector F representing the flare distribution data is acquired by the following equation.

$$\mathbf{F} = \sum_{k=1}^{K} (-1)^{k+1} (\mathbf{M} - \mathbf{E})^k \mathbf{P}$$

**7.** A display program for causing a computer to execute:

a first step of outputting a plurality of test color image data to a color image display device and making the color image display device display a plurality of test color images;
a second step of acquiring the spatial distribution of display colors of each of the plurality of test color images having been displayed on the color image display device in accordance with the first step;
a third step of calculating corrected color image data from color image data so as to correct optical flare of the color image display device on the basis of the plurality of test color image data, and the spatial distribution of display colors of the test color image having been acquired in accordance with each of the plurality of test color image data by means of the second step; and
a fourth step of outputting the corrected color image data having been calculated in accordance with the third step to the color image display device and making the color image display device display the corrected color image data.

**8.** A display method comprising:

a first step of outputting a plurality of test color image data to a color image display device and making the color image display device display a plurality of test color images;
a second step of acquiring the spatial distribution of display colors of each of the plurality of test color images having been displayed on the color image display device in accordance with the first step;
a third step of calculating corrected color image data from color image data so as to correct optical flare of the color image display device on the basis of the plurality of test color image data, and the spatial distribution of display colors of the test color image having been acquired in accordance with each of the plurality of test color image data by means of the second step; and
a fourth step of outputting the corrected color image data having been calculated in accordance with the third step to the color image display device and making the color image display device display the corrected color image data.

# FIG.1

EP 1 699 035 A1

# FIG.2

2: IMAGE CORRECTION DEVICE

PROJECTOR (1)

IMAGE DATA STORAGE DEVICE (11)

FLARE CORRECTION DEVICE (12)

FLARE CALCULATION DEVICE (13)

TEST IMAGE SHOOTING CAMERA (4)

EP 1 699 035 A1

# FIG.3

13: FLARE CALCULATION DEVICE

PROJECTOR — 1

TEST IMAGE SHOOTING CAMERA — 4

21 — TEST IMAGE OUTPUT DEVICE

22 — SHOT IMAGE INPUT DEVICE

23 — CORRECTION DATA CALCULATION DEVICE

24 — CORRECTION DATA STORAGE DEVICE

12 — FLARE CORRECTION DEVICE

# FIG.4

1280 PIXELS

1024 PIXELS

```
+  +  +  +  +

+  +  +  +  +

+  +  +  +  +

+  +  +  +  +
```

# FIG.5

```
COORDINATE 1     128, 128
COORDINATE 2     384, 128
          .
          .
          .

COORDINATE 20    1152. 896
```

# FIG.6

1280 PIXELS

1024 PIXELS

256 PIXELS

256 PIXELS

# FIG.7

PATTERN 1    0, 0, 256, 256
PATTERN 2    256, 0, 256, 256
.
.
.

PATTERN 20   1024, 768, 256, 256

# FIG.8

```
                    ┌─────────────────┐
                    │ ⌐21             │
                    │  TEST IMAGE     │      ⌐22: SHOT IMAGE
                    │ OUTPUT DEVICE   │           INPUT DEVICE
                    └─────────────────┘
```

TEST IMAGE OUTPUT DEVICE — 21

22: SHOT IMAGE INPUT DEVICE

CAMERA CONTROL DEVICE — 31

TEST IMAGE SHOOTING CAMERA — 4

SHOT IMAGE STORAGE DEVICE — 32

GEOMETRIC CORRECTION DATA CALCULATION DEVICE — 33

CORRECTION DATA CALCULATION DEVICE — 23

GEOMETRIC CORRECTION DEVICE — 34

# FIG.9

□  □  □  □  □
S1  S2  S3  S4  S5

□  □  □  □  □
S6  S7  S8  S9  S10

□  □  □  □  □
S11 S12 S13 S14 S15

□  □  □  □  □
S16 S17 S18 S19 S20

# FIG.10

□  □  □  □
S2  S3  S4  S5

□  □  □  □  □
S6  S7  S8  S9  S10

□  □  □  □  □
S11 S12 S13 S14 S15

□  □  □  □  □
S16 S17 S18 S19 S20

**INTERNATIONAL SEARCH REPORT**

International application No.

PCT/JP2004/019410

A.  CLASSIFICATION OF SUBJECT MATTER
Int.Cl⁷ G09G3/20, 3/36, 5/00

According to International Patent Classification (IPC) or to both national classification and IPC

B.  FIELDS SEARCHED

Minimum documentation searched (classification system followed by classification symbols)
Int.Cl⁷ G09G3/20, 3/36, 5/00

Documentation searched other than minimum documentation to the extent that such documents are included in the fields searched
Jitsuyo Shinan Koho          1926-1996    Jitsuyo Shinan Toroku Koho    1996-2005
Kokai Jitsuyo Shinan Koho     1971-2005    Toroku Jitsuyo Shinan Koho    1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2003-46810 A  (NEC View Technology, Ltd.),<br>14 February, 2003 (14.02.03),<br>Par Nos. [0002] to [0016]; Figs. 10 to 13<br>& US 2003/0020836 A1    & EP 1289280 A2 | 1-5,7-8<br>6 |
| Y<br>A | WO 03/071794 A1  (Olympus Optical Co., Ltd.),<br>28 August, 2003 (28.08.03),<br>Page 16, line 10 to page 24, line 8; Figs. 1,<br>9 to 12<br>(Family: none) | 1-5,7-8<br>6 |
| E,A | JP 2005-20314 A  (Olympus Corp.),<br>20 January, 2005 (20.01.05),<br>Full text; all drawings<br>(Family: none) | 1-8 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>27 January, 2005 (27.01.05) | Date of mailing of the international search report<br>15 February, 2005 (15.02.05) |
|---|---|
| Name and mailing address of the ISA/<br>  Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2004/019410

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-241791 A (Victor Company Of Japan, Ltd.), 08 September, 2000 (08.09.00), Full text; all drawings (Family: none) | 1-8 |
| A | JP 2003-98599 A (NEC Corp.), 03 April, 2003 (03.04.03), Full text; all drawings (Family: none) | 1-8 |

Form PCT/ISA/210 (continuation of second sheet) (January 2004)